# EUROPEAN PATENT SPECIFICATION

(11) **EP 0 899 666 B1**
(45) Date of publication and mention of the grant of the patent: **09.07.2003**
(21) Application number: 98115837.1
(22) Date of filing: 21.08.1998
(51) Int. Cl.: G06F 17/30

(54) **Image processing apparatus displaying a catalog of different types of data in different manner**
Bildverarbeitungsgerät zur Anzeige eines Katalogs von verschiedenen Datenarten auf verschiedene Weise
Appareil de traitement d'images pour afficher un catalogue de divers types de données de manières differentes

(30) Priority: 25.08.1997 JP 22785897; 05.09.1997 JP 24060897
(43) Date of publication of application: 03.03.1999
(60) Divisional application: 03002842.7
(73) Proprietor: SHARP KABUSHIKI KAISHA, Osaka-shi, Osaka-fu 545-0013 (JP)
(72) Inventor: Yanagi, Akio, Nara-shi, Nara (JP); Kamiya, Shin, Nara-shi, Nara (JP)
(74) Representative: Müller, Frithjof E., Dipl.-Ing.

(56) References cited:
- EP-A- 0 619 550
- EP-A- 0 676 705
- EP-A- 0 678 816
- PATENT ABSTRACTS OF JAPAN vol. 095, no. 010, 30 November 1995 & JP 07 175816 A (HITACHI LTD), 14 July 1995
- TONOMURA Y ET AL: "CONTENT ORIENTED VISUAL INTERFACE USING VIDEO ICONS FOR VISUAL DATABASE SYSTEMS" JOURNAL OF VISUAL LANGUAGES AND COMPUTING, vol. 1, 1 January 1990, pages 183-198, XP000195706
- PATENT ABSTRACTS OF JAPAN vol. 096, no. 007, 31 July 1996 & JP 08 070430 A (SONY CORP), 12 March 1996

## Description

### BACKGROUND OF THE INVENTION

### Field of the Invention

The present invention relates to an apparatus to display and search for data representative of an electronic image. More particularly, the present invention relates to a data processing apparatus and an image processing apparatus that discriminate different types of data such as a still picture and a motion picture recorded on a recording medium to provide a catalog display, whereby data can be easily retrieved or displayed.

### Description of the Background Art

In these few years, many digital images are used such as in electronic publishing, home page authoring on the Internet, and in the arrangement of pictures and videos (movies) at home. The need to provide a catalog display of the image data is increasing for the purpose of storing a large amount of digital image data into a recording medium such as a hard disk, a MD (Micro Disk) or a MO (Magneto-Optical Disk), and searching for a desired one out of the image data stored in the medium.

For example, when a great amount of images are captured with a scanner and stored into a recording medium as image data in an electronic filing device, a catalog of image data (reduced image) corresponding to a reduction of the original image data (original image) is displayed at the time of retrieval. The user selects a reduced image corresponding to a desired original image out of the catalog-displayed reduced image using a mouse or the like to obtain the desired image data.

For example, EP-A-0 676 705 teaches displaying movies and still pictures together on a single screen.

In Japanese Patent Laying-Open No. 9-114843, a screen is divided into a predetermined number (for example 10) of regions to display a catalog of reduced images from which the user can select the desired image data. As to display of a motion picture, Japanese Patent Laying-Open Nos. 8-70430 and 8-335387 disclose the technique of screen-splitting to display a motion picture.

However, in the case where a screen is merely divided to provide a catalog of reduced images as disclosed in Japanese Patent Laying-Open No. 9-114843, the number of images that can be displayed at one time is limited. When the number of still pictures of the original image exceeds a predetermined number, it will be necessary to repeat the operation of displaying reduced images for every predetermined number of pictures and turning the page to the next screen. When a certain image is to be selected from several hundreds of still pictures, the time required until a desired image is displayed increases, which is not practical.

When motion pictures are addressed in an electronic filing device, the number of original images and reduced images will be orders of magnitude greater than that of still pictures since a motion picture is a time series of still pictures. When motion pictures and still pictures are processed by the same device, the time required to obtain a desired still picture or a desired motion picture will increase significantly. Furthermore, the searching will further take a longer time when a desired image is to be retrieved from a motion picture since a plurality of still pictures constitute the motion picture. There is also a problem that it is difficult to display or retrieve motion pictures and still pictures together when they are processed with the same device.

Furthermore, it is generally difficult to deal with data associated with the time axis such as a motion picture and data not associated with the time axis such as a still picture together in a consolidated manner. A data processing apparatus that can deal such data items efficiently and together is desired.

### SUMMARY OF THE INVENTION

In view of the foregoing, an object of the present invention is to provide a data processing apparatus and an image processing apparatus that can select a desired one of a first data item associated with the time axis and a second data item on a recording medium with fewer steps of procedure.

Another object of the present invention is to provide a data processing apparatus and an image processing apparatus that can select and display a desired one of motion and still pictures on a recording medium with fewer steps of procedure.

Another object of the present invention is to provide a data processing apparatus and an image processing apparatus that can easily select and display a desired one out of motion and still pictures on a recording medium with fewer steps of procedure.

Still another object of the present invention is to provide a data processing apparatus and an image processing apparatus that can easily select and display a desired one out of a plurality of motion pictures and still pictures on a recording medium with fewer steps of procedure.

A still further object of the present invention is to provide a data processing apparatus and an image processing apparatus that allows a user to discriminate at a glance a motion picture from a still picture on a recording medium, and that can easily select and display a desired image with fewer steps of procedure.

Yet a further object of the present invention is to provide a data processing apparatus and an image processing apparatus that can easily select and display a desired image with fewer steps of procedure by allowing a motion picture to be discriminated at a glance from a still picture on a recording medium, and determining at a glance the display time of a motion picture.

These objects are achieved by the invention which is defined by the appended claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of an image processing apparatus according to an embodiment of the present invention.
Fig. 2 shows the relationship between an original image and a reduced image.
Fig. 3 is a diagram for describing the data structure of a disk according to an embodiment of the present invention.
Fig. 4 shows the details of a time stamp DB file according to a first embodiment of the present invention.
Fig. 5 shows the details of time stamp information according to the first embodiment of the present invention.
Fig. 6 shows an example of a display of a still picture and a motion picture according to a first embodiment of the present invention.
Fig. 7 shows a display coordinate system according to the first embodiment of the present invention.
Fig. 8 is a flow chart for describing an operation of the apparatus of the first embodiment of the present invention related to the display of Fig. 6.
Fig. 9 shows a display example of a view point and frame forwarding according to the first embodiment of the present invention.
Fig. 10 is a flow chart for describing an operation of the apparatus of the first embodiment of the present invention related to the display of Fig. 9.
Figs. 11A-11D show other display examples according to the first embodiment of the present invention.

### DESCRIPTION OF THE PREFERRED EMBODIMENT

### First Embodiment

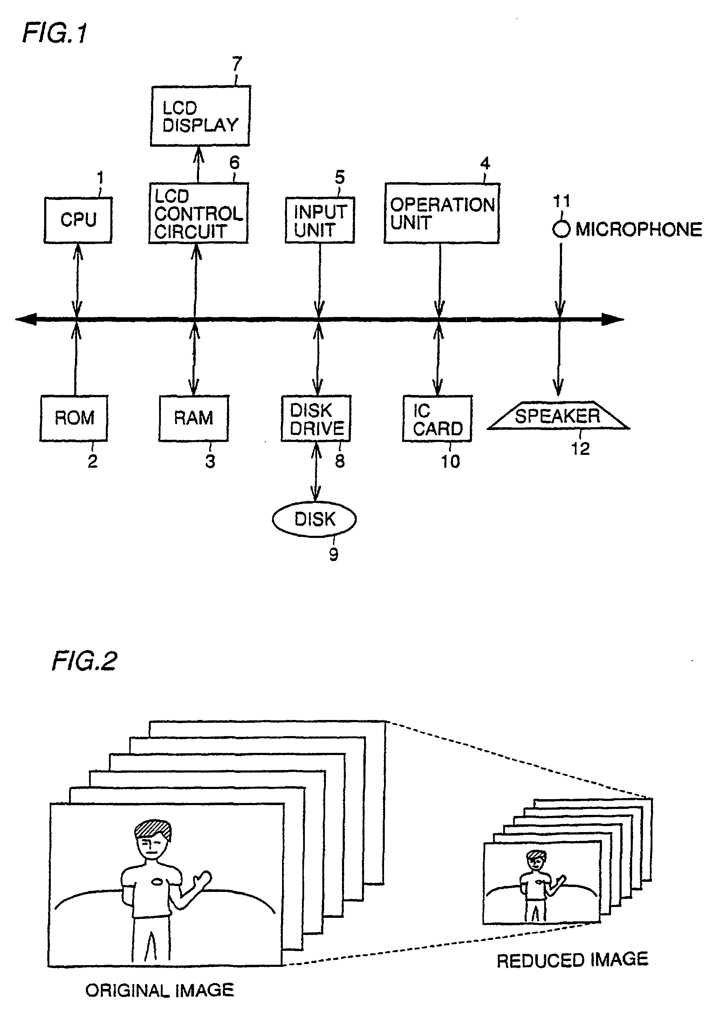

Fig. 1 shows a first embodiment in which the image processing apparatus of the present invention is applied to an electronic camera that can shoot a motion picture and a still picture. Referring to Fig. 1, the image processing apparatus includes a CPU (Central Processing Unit) 1 as control means for providing the entire control of the apparatus, a ROM (Read Only Memory) 2 for storing a program to be executed by CPU 1 for various processing and a dictionary for generating character data, a RAM (Random Access Memory) 3 for temporarily storing programs and data, an operation unit including an operation button, a pen, a mouse, a track pole or a keyboard for operational command and character data input, an input unit 5 with a CCD (Charge-Coupled Device) and a drive circuit thereof for shooting, a LCD (Liquid Display Device) control circuit 6 driven by a display command from CPU 1, a LCD display 7 for displaying a desired screen by LCD control circuit 6, a disk 9 which is a storing medium for storing a still picture or a motion picture shot through input unit 5, and also voice and text data, if necessary, a disk drive 8 for carrying out a reproduction, recording, or erasure process with respect to disk 9, an IC (Integrated Circuit) card 10 which is a recording medium in which data similar to that of disk 9 can be recorded, a microphone 11 for capturing voices at the time of shooting, or independent of shooting, and a speaker 12 for providing reproduced voice from disk 9.

Disk 9 and IC card 10 are recording media for storing data items. Therefore, the embodiment of the present invention will be described hereinafter with disk 9 as an example of the recording medium. The keyboard displayed on the screen of LCD display 7 can be used as operation unit 4. The function particularly required for operation panel 4 is to point out an arbitrary position on LCD display 7. Therefore, a mouse is most preferable for operation unit 4. However, any device that can point out an arbitrary position on a display screen may be used.

The shooting operation is initiated in response to a shooting command through operation unit 4. In the shooting mode, CPU 1 reduces the number of pixels according to a predetermined procedure from the original image captured by input unit 5 to generate a reduced image. The shooting time is added to the reduced image and the original image to be stored in disk 9. A reduced image can be generated by thinning the pixels for ever predetermined number of pixels in the vertical direction and horizontal direction of the image. Alternatively, an image reduced to a predetermined number of pixels can be generated via a certain function. In the present embodiment, input unit 5 can capture a color image. However, the present invention is also applicable to an apparatus that can capture only a black-and-white image. Furthermore, a black-and-white reduced image can be obtained from an input color image.

The present apparatus can shoot and record both a still picture and a motion picture according to a command through operation unit 4. When the original image is a still picture, one reduced picture corresponding to the original image is produced. When the original image is a motion picture, a plurality of reduced images corresponding to respective still pictures are produced since a motion picture is constituted by a time series of still pictures. LCD display 7 is used as a shooting monitor during a shooting operation.

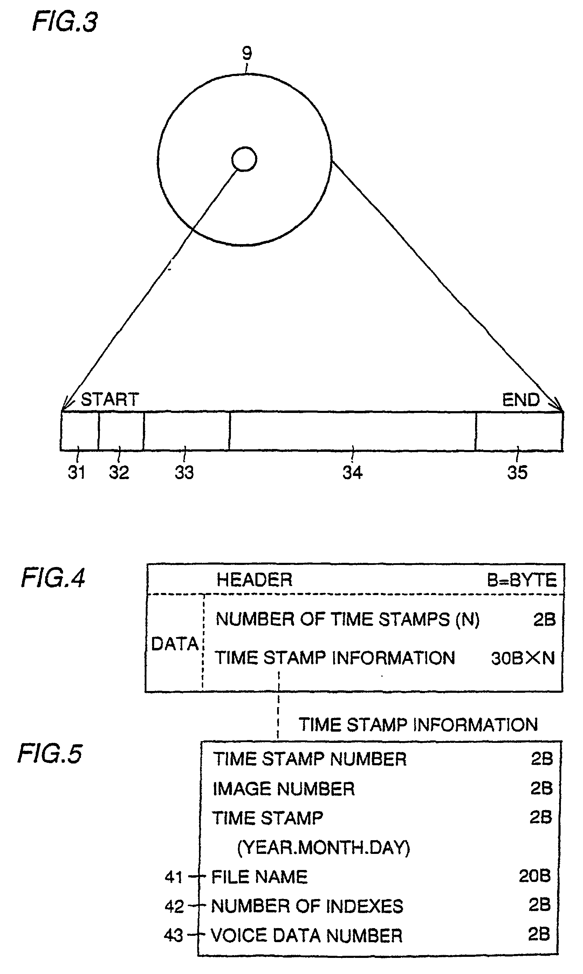

Fig. 3 shows a file structure of disk 9 in which image data is stored. From the innermost to outermost portion of disk 9 are arranged a TOC (Table of Contents) 31 where the position information of each file is recorded together, a time stamp DB (Data Base) file 32 in which an identifier and the like is stored to indicate whether the image is a still picture or a motion picture, a reduced image data file 33 in which a reduced image generated from an original image is recorded, an original image data file 34 in which an original image, whether a still picture or a motion picture, is stored, and a voice data file 35 in which voice data input from microphone 11 is recorded. The voice data of voice data file 35 is generally additional data applied to the original image. However, only a voice can also be recorded.

Fig. 4 shows a structure of time stamp DB file 32. Time stamp DB file 32 includes a header and data. The data includes the number of time stamps (N) of 2 bytes and N time stamp information of 30 bytes.

Referring to Fig. 5, each time stamp information includes the time stamp number assigned to each image in the shooting order (2 bytes), the image number indicating the image number for each region (2 bytes), the time stamp indicating the shooting time applied by CPU 1 (2 bytes), a file name 41 input through operation unit 4 and serving as an identifier indicating the presence/absence of character data (text data) applied to a relevant image (20 bytes), the number of indexes 42 serving as an identifier for discriminating whether the image is a still picture or a motion picture (2 bytes), and voice data number 43 which is an identifier indicating the presence/absence of voice data applied to a relevant image. Voice data number 43 is the address of the voice data applied to the original image. "00h" is entered in voice data number 43 when no voice data is applied.

The number of indexes 42 of the present invention is the number of reduced images of a motion picture or a still picture. Therefore, the number of indexes 42 takes a value of 1 for a still picture and a value of 2 or above corresponding to the number of reduced images in time series for a motion picture. Alternatively, the number of original images can be used as the number of indexes 42. However, it is to be noted that TOC 31 on the innermost portion is first accessed by the optical head of disk drive 8 in the reproduction operation of an image. Therefore, when data is stored in disk 9 in the form shown in Fig. 3, a reduced image located in the proximity of TOC 31 is preferable since the data can be accessed faster.

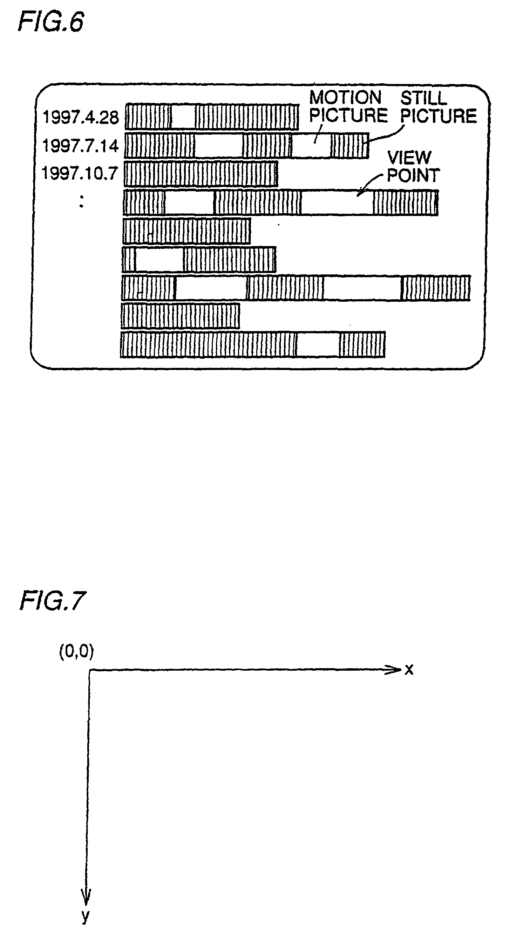

Display of the recorded contents of disk 9 is carried out as set forth in the following. The user provides an image display command to the apparatus through operation unit 4. In response to a display command from operation unit 4, CPU 1 initiates read out from TOC 31 and time stamp DB file 32 of disk 9. Accordingly, an optical head not shown of disk drive 8 accesses TOC 31 and time stamp DB file 32 to read out the number of indexes 42. CPU determines whether the corresponding image is a still picture or a motion picture depending upon whether the value of this number of indexes 42 is 1 or at least 2. Then, a display in the manner shown in Fig. 6 is provided on LCD display 7. The display format shown in Fig. 6 represents the feature of the present embodiment.

Referring to Fig. 6, the display of a motion picture and a still picture is provided in different display manners on the basis of a predetermined shooting time (year, month, and day in the present embodiment) according to the image time stamp. More specifically, one category is created for each predetermined shooting time. Each image is classified according to the time stamp into each category of a shooting time, and symbolized (represented in a graphical form) depending upon a motion picture type or a still picture type to be displayed in a mixed manner in a relevant category. The length of the graphical form corresponding to each image is altered according to the number of indexes 42 of that image, i.e., the number of shot pictures. The category for classification is not limited to the unit of a predetermined shooting time. The category can be classified according to the shooting site, the operator of the camera, the apparatus used for shooting, the object of interest, the source of image data, and the like.

It is not necessary to provide the display length for a motion picture and the display length for a still picture on the same time scale. It is desirable from the point of visuality to compress the time scale of the display of a motion picture than that of a still picture since a motion picture includes many images. The basis of the date of shooting a motion picture is a matter of designing choice, and is not particularly limited. For example, the time of initiating shooting a motion picture, the time terminating the shooting, any time during the shooting operation, or a time from the start to end of the shooting that can be determined according to some rule can be employed. However, it is generally desirable to use the time of initiating a series of shooting. A graphical form having the displayed size (width in the x axis direction in present embodiment) altered according to the number of pictures constituting an image is referred to as "number of pictures representing graphic" hereinafter. This "number of pictures representing graphic" can be regarded as a symbol that indicates the type of the image and the length of the time axis.

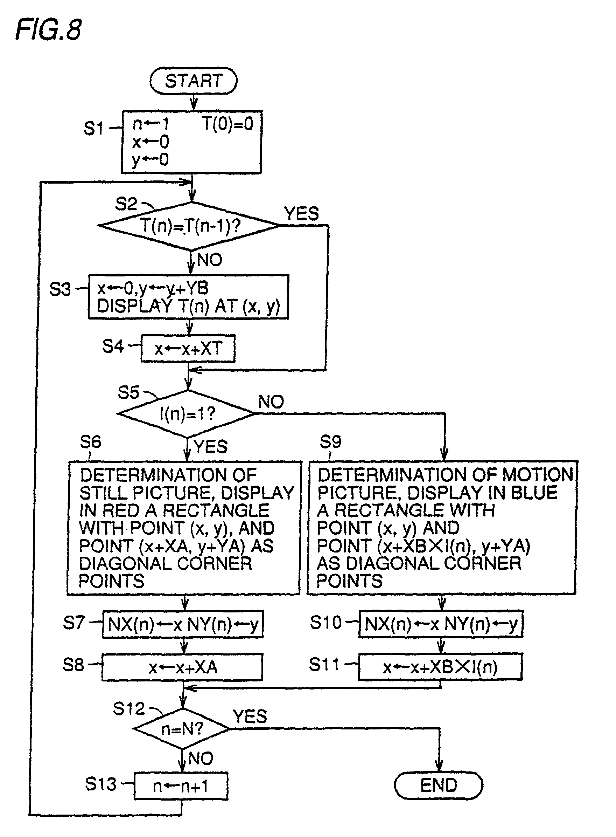

An example of a program executed by CPU 1 to realize the display manner of Fig. 6 will be described hereinafter with reference to the flow chart of Fig. 8. The structure of the following program is only a way of example, and a program having other control structures can be implemented in the present invention.

In the following, the top left point on the screen of LCD display 7 is (x, y) = (0, 0), i.e., the origin, as shown in Fig. 7. The x axis and the y axis are plotted rightwards and downwards, respectively, from the origin.

In the flow chart of Fig. 8, XA, XB, YA, YB, and XT are constants. XA is a constant representing the width of one image in the x axis direction when a still picture is displayed in the form of Fig. 6. XB is a constant representing the width of one image in the x axis direction when a motion picture is displayed in the form of Fig. 6. YA is a constant representing the height of one image in the y axis direction when a still picture is displayed according to the form of Fig. 6. YB is a constant indicating the y coordinate value of the first row in Fig. 6. XT is a constant representing the length in the x axis direction of the time stamp display of Fig. 6.

In the following description, the n-th time stamp is represented as T(n) (n is an integer of 0≦n≦N). "N" is the total number of time stamps within time stamp DB file 32. I(n) indicates the number of indexes of the image corresponding to the n-th time stamp T(n).

At step S1, CPU 1 initializes the time stamp number n (0≦n≦N) which is a variable to 1, the coordinate (x, y) to (0, 0) and T(0) of time stamp T(n) to 0. It is to be noted that "n" has its value altered according to the progress of the process.

At step S2, CPU 1 determines whether time stamp T(n) is equal to time stamp T(n-1). When T(n) = T(n-1), the control jumps to step S5. When T(n) = T(n-1) is not established, the control proceeds to step S3.

At step S3, the contents (year • month • day) of time stamp T(n) is displayed at the coordinate (x, y) = (0, y+YB) on LCD display 7. Since the time stamp is displayed with the length of XT in the x axis direction, CPU 1 updates the value of x to x+XT at step S4.

At step S5, CPU 1 determines whether I(n) indicating the number of indexes 42 is 1 or not. When I(n)=1, control proceeds to step S6 to determine that the image is a still picture. A rectangle with point (x, y) and point (x+XA, y+YA) as the left top corner point and right bottom corner point, respectively, is displayed in red on LCD display 7. At step S7, CPU 1 records that coordinate (x, y) as the x coordinate NX(n) and the y coordinate NY(n) of the n-th "number of pictures representing graphic". As a result of the process of step S6, the X coordinate of the next rectangle display is increased by length XA in the x axis direction of the displayed graphic. Therefore, at step S8, coordinate x is updated to x+XA. Then, the control proceeds to step S12.

When determination is made that the number of indexes I(n) is 2 or more at step S5, control proceeds to step S9. At step S9, CPU 1 determines that the relevant image is a motion picture. A rectangle with point (x, y) and point (x+XB×I(n), y+YA) as the left top corner point and right bottom corner point, respectively, and painted blue, is displayed on LCD display 7. Thus, a still picture can easily be discriminated from a motion picture by displaying a still picture in red and a motion picture in blue. It is to be understood that the still picture and motion picture displayed in red and blue are not limited to these colors, and may be displayed in other different colors. Furthermore, discrimination between a still picture and a motion picture can be made by a feature other than the color.

At step S10, CPU 1 records the relevant coordinate (x, y) as the x coordinate NX(n) and the y coordinate NY(n) of the n-th "number of pictures representing graphic". Since the X coordinate increases by the length of the displayed graphic, coordinate x is updated to x+XB×I(n) at step S11. Then, control proceeds to step S12.

At step S12, CPU 1 compares the time stamp number n with the total number of time stamps N. When these values differ, control proceeds to step S13 where CPU 1 adds 1 to the value of n. Then, control returns to step S2 to repeat the above-described process. When time stamp number n is equal to the total number of stamps N, the process ends. Although all the images corresponding to the total number of stamps N are displayed to be identified at a glance in the present embodiment, only a portion of the images may be displayed instead.

In the present embodiment, a catalog of images is output on LCD display 7 according to a display command through operation unit 4. The present invention is not limited to this embodiment. For example, CPU 1 can detect loading of disk 9 into disk drive 8 to provide a catalog of the images stored in disk 9 onto LCD display 7 in the above-described display manner in response to the load of disk 9. This is desirable from the stand point of convenience since the contents of disk 9 can be automatically and immediately identified upon loading disk 9.

In order to discriminate a motion picture from a still picture in the present embodiment, a motion picture is displayed as a series of images by one rectangle graphical form whereas a still picture is displayed as a rectangle graphical form for each image in a different color. The character of the display manner for discrimination of a motion picture and a still picture is not limited particularly to the color. Various graphical shapes (circle, triangular, and the like), the line type of the contour of the graphic (thickness, dotted line, solid line), the size of the graphic, the pattern (halftone, shaded, wave, and the like in the region of the graphic) can be employed as other embodiments.

The operation of searching for an image in the display form of Fig. 6 will be described hereinafter. At the time of retrieval, the user specifies through operation unit 4 the coordinate (view point) in the rectangle representing the image to be displayed on the display screen of LCD display 7. By this specification, the coordinate is applied to the apparatus. When the image in the proximity of the view point is a still picture, a reduced picture of a still picture is provided on LCD display 7. When the image in the proximity of the view point is a motion picture, a reduced image is frame-forwarded on LCD display 7 to provide a display of a motion picture.

When a view point is input in the present embodiment, reduced image data file 33 is accessed to reproduce and display a reduced image. However, implementation of the present invention is not limited to this. For example, in response to an input of a view point, original image data file 34 can be accessed to reproduce an original image. In the present embodiment, it is desirable to output a reduced image since reduced image data file 33 is located adjacent to time stamp DB file 32 to allow a faster output.

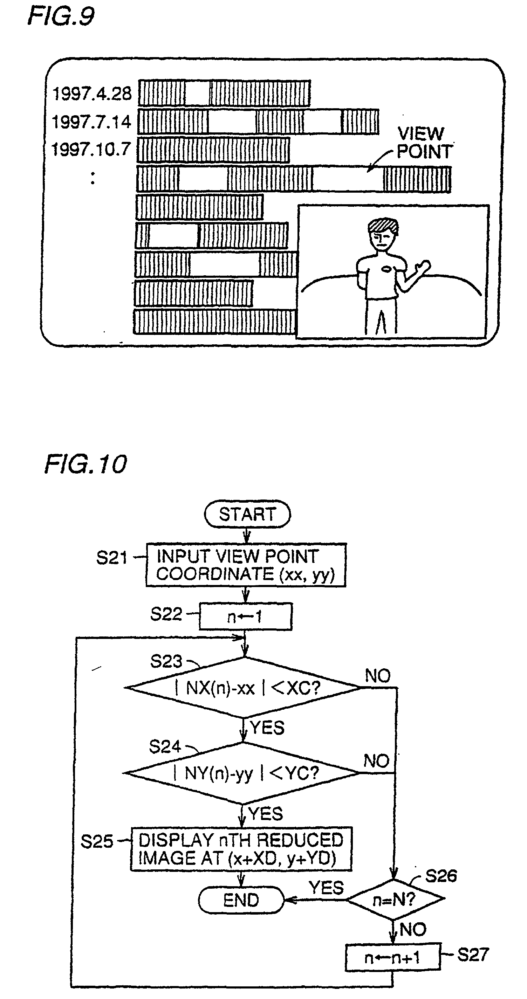

The control structure of the program that realizes the display operation of Fig. 9 will be described hereinafter according to the flow chart of Fig. 10. In the flow chart of Fig. 10, XC and YC are constants that become the threshold values to determine the closeness between a view point and an image. XD and YD are constants representing the offset between the image catalog display position and the position where the reduced image of a specified image is displayed.

At step S21, the user inputs an arbitrary coordinate (xx, yy) through operation unit 4 as the coordinate of the view point. The user does not actually input the coordinate itself. The user specifies a certain point on the displayed screen of LCD display 7 using a pointer. The coordinate of the specified point is applied to the program (CPU 1). In response to this input, CPU 1 initialize the time stamp number n to 1 at step S22.

At step S23, comparison is carried out whether the x coordinate NX(n) of the n-th graphic recorded at steps S7 and S10 of Fig. 8 is in the proximity of the x coordinate xx of the view point input at step S21. More specifically, the absolute value |NX(n)-xx| of NX(n)-xx is calculated. Determination is made whether this absolute value is smaller than a predetermined upper limit value XC. When |NX(n)-xx| <XC, the control proceeds to step S24. When |NX(n)-xx| ≧ XC, control proceeds to step S26.

At step S24, a similar process is carried out for the y coordinate. More specifically, the absolute value |NY(n)-yy| of NY(n)-yy is calculated. Determination is made whether this absolute value is smaller than a predetermined upper limit value YC. When |NY(n)-yy|<YC, control proceeds to step S25. When |NY(n)-yy | ≧ YC, control proceeds to step S26.

When determination is made that the view point (xx, yy) is close to the display coordinate of the n-th graphic, control proceeds to step S25. At step S25, CPU 1 displays the n-th reduced image at the coordinate (x+XD, y+YD) on LCD display 7. Then, the display process ends.

When the determination result is NO at either of step S23 or S24, comparison is made whether the time stamp number n is equal to the total number of time stamps N at step S26. When n=N, the process ends. When n≠N, control proceeds to step S27 to add 1 to n to obtain the next time stamp number n+1. Control then returns to step S23 to repeat the above-described process for the (n+1)th graphic.

In the present embodiment, comparison between the coordinates of the view point and the "number of pictures representing graphic" is initiated from the first time stamp number n and until the condition is satisfied or until the comparison with the coordinates of all the graphics is completed. However, the present invention is not limited to this. For example, comparison can be initiated from a certain number greater than 1. Also, the comparison process can be terminated when n matches a value smaller than N. Alternatively, both of these events can be employed.

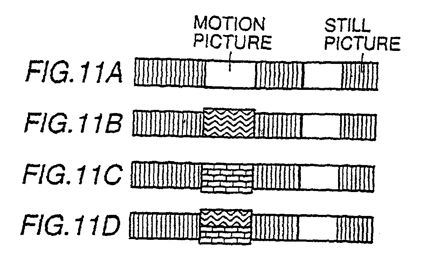

Figs. 11A-11D show a catalog display format of image data differing from that of Fig. 6, according to the presence/absence of voice data or text data. Fig. 11A indicates that neither voice data nor text data is added to any of the motion and still pictures. Fig. 11B indicates that only voice data, not text data, is added to the left side motion picture. Fig. 11C shows that only text data, not voice data, is added to the left side motion picture. Fig. 11D shows that both text data and voice data are applied to the left side motion picture. Such difference in the display format can be effected as a result of CPU 1 determining the contents of file name 41 and voice data number 43 in time stamp DB file 32. By differentiating the display format of image data when voice data, or text data, or both thereof, are applied to the image data, image data can be classified from the standpoint of more aspects to facilitate display and retrieval at a glance.

The above embodiment was described in which the present invention is applied to an electronic camera that can carry out recording and reproduction. The invention of the present application can also be implemented as a display device or a retrieval device that carries out the above-described image display and retrieval using a computer apparatus. Furthermore, an apparatus according to the present invention can be implemented by storing a program that executes the above-described display and retrieval function in a recording medium such as a floppy disk or a CD-ROM (Compact Disk), which is appropriately installed into a computer.

Thus, according to the image processing apparatus of the present embodiment, the contents of the recording medium can be identified at a glance since the number of pictures representing graphic can be displayed according to the length corresponding to the number of shot still pictures and motion pictures and in different display manners on the basis of a predetermined shooting time. Furthermore, a corresponding image can be displayed when the user wishes to view in further detail by just specifying an arbitrary coordinate on the screen.

Although the present invention has been described and illustrated in detail, it is clearly understood that the same is by way of illustration and example only and is not to be taken by way of limitation, the scope of the present invention being limited only by the terms of the appended claims.

## Claims

1. An image data processing apparatus for displaying a catalog of image data items of a plurality of types including an image data item of first type associated with a time interval on a time axis and an independent image data item of second type associated with an instant of time, wherein each image data item is also assigned classification information to classify said image data item into a plurality of categories differing from said first and second types of image data items, said data processing apparatus comprising:
a display device (7), and
an arrangement means (1, 6) for reading out a plurality of image data items from a recording medium (9) to classify said read out plurality of image data items for every category and generating a catalog in which a mixture of image data items of said first type and image data items of said second type that are respectively symbolized is arranged for each category, wherein each image data item of first type is symbolized in a manner that is altered corresponding to a length of said time interval on its time axis, and each image data item of second type is symbolized in a predetermined constant manner, for display on said display device (7).

2. The data processing apparatus according to claim 1, further comprising:
a pointer device for a user to specify an arbitrary point in said catalog display on said display device,
select means responsive to specification of a certain point in said catalog display by said pointer device for selecting one of said data items having a predetermined relationship with said specified point, and
reproduction means for reading out and reproducing said selected data item.

3. The data processing apparatus according to claim 1, wherein said plurality of categories include a year, month, and day said data item is obtained.

4. The data processing apparatus according to claim 1, wherein said data item includes image data.

5. The data processing apparatus according to claim 4, wherein said first type of data item is motion picture data.

6. The data processing apparatus according to claim 4, wherein said second type of data item is still picture data.

7. The data processing apparatus according to claim 4, further composing:
a pointer device for a user to specify an arbitrary point in said catalog display on said display device,
select means responsive to specification of a certain point in said catalog display by said pointer device for selecting one of said image data having a predetermined relationship with said specified point, and
reproduction means for reading out said selected image data and reproducing the same for display on said display device.

8. The data processing apparatus according to claim 7, further comprising:
input means for entering a motion picture and a still picture as image data with discrimination therebetween,
storage means for storing said image data

9. The data processing apparatus according to claim 7, wherein said reproduction means reproduces a reduced image of said read out motion picture or still picture for display on said display device.

10. The data processing apparatus according to claim 1, wherein said arrangement means differentiates at least one of a line type, size, and in-region pattern type employed to draw a color, shape, contour of a symbol for said first type of data item from the symbol for said second type of data item.

11. The data processing apparatus according to claim 1, wherein any of said image data items of first type and said image data items of second type has additional information,
wherein said arrangement means differentiates a display manner of a corresponding symbol between a data item with said additional information and other data items.

12. The data processing apparatus according to claim 11, wherein said additional information is voice information, text data, or both voice information and text data added to a data item.

## Patentansprüche

1. Bilddaten-Verarbeitungsvorrichtung zum Anzeigen eines Katalogs von Einzelbilddaten mehrerer Typen einschließlich von Bildeinzeldaten eines ersten Typs, dem ein Zeitintervall auf einer Zeitachse zugeordnet ist, und von Bildeinzeldaten eines zweiten Typs, dem ein Zeitpunkt zugeordnet ist, wobei allen Bildeinzeldaten auch Klassifizierungsinformation zugewiesen ist, um sie in mehrere Kategorien verschieden vom ersten und zweiten Typ von Bildeinzeldaten zu klassifizieren, mit:
- einer Anzeigevorrichtung (7) und
- einer Anordnungseinrichtung (1, 6) zum Auslesen mehrerer Bildeinzeldaten aus einem Aufzeichnungsträger (9) zum Klassifizieren der ausgelesenen mehreren Bildeinzeldaten nach jeder Kategorie und zum Erzeugen eines Katalogs, in dem für jede Kategorie eine Mischung aus Bildeinzeldaten des ersten Typs und Bildeinzeldaten des zweiten Typs, die jeweils symbolisiert sind, angeordnet ist, wobei jeweilige Bildeinzeldaten des ersten Typs auf eine Weise symbolisiert sind, die entsprechend der Länge des Zeitintervalls auf der Zeitachse variiert, und jeweilige Bildeinzeldaten des zweiten Typs auf eine vorbestimmte konstante Weise symbolisiert sind, um eine Anzeige auf der Anzeigevorrichtung (7) auszuführen.

2. Datenverarbeitungsvorrichtung nach Anspruch 1, ferner mit:
- einer Zeigevorrichtung für einen Benutzer zum Spezifizieren eines beliebigen Punkts innerhalb der Kataloganzeige auf der Anzeigevorrichtung;
- einer Auswähleinrichtung, die auf die Spezifizierung eines bestimmten Punkts innerhalb der Kataloganzeige durch die Zeigervorrichtung reagiert, um ein Exemplar der Einzeldaten mit vorbestimmter Beziehung zum spezifizierten Punkt auszuwählen; und
- einer Reproduziereinrichtung zum Auslesen und Reproduzieren der ausgewählten Einzeldaten.

3. Datenverarbeitungsvorrichtung nach Anspruch 1, bei der zu den mehreren Kategorien das Jahr, der Monat und der Tag gehören, an dem die Einzeldaten erhalten wurden.

4. Datenverarbeitungsvorrichtung nach Anspruch 1, bei der die Einzeldaten Bilddaten enthalten.

5. Datenverarbeitungsvorrichtung nach Anspruch 4, bei der der erste Typ von Einzeldaten Daten bewegter Bilder sind.

6. Datenverarbeitungsvorrichtung nach Anspruch 4, bei der der erste Typ von Einzeldaten Stehbilddaten sind.

7. Datenverarbeitungsvorrichtung nach Anspruch 4, ferner mit:
- einer Zeigevorrichtung für einen Benutzer zum Spezifizieren eines beliebigen Punkts innerhalb der Kataloganzeige auf der Anzeigevorrichtung;
- einer Auswähleinrichtung, die auf die Spezifizierung eines bestimmten Punkts innerhalb der Kataloganzeige durch die Zeigervorrichtung reagiert, um ein Exemplar der Einzeldaten mit vorbestimmter Beziehung zum spezifizierten Punkt auszuwählen; und
- einer Reproduziereinrichtung zum Auslesen der ausgewählten Bilddaten und zum Reproduzieren derselben zur Anzeige auf der Anzeigevorrichtung.

8. Datenverarbeitungsvorrichtung nach Anspruch 7, ferner mit:
- einer Eingabeeinrichtung zum Eingeben eines bewegten Bilds und eines Stehbilds als Bilddaten mit Unterscheidung zwischen diesen; und
- einer Speichereinrichtung zum Speichern der Bilddaten.

9. Datenverarbeitungsvorrichtung nach Anspruch 7, bei der die Reproduziereinrichtung ein verkleinertes Bild des ausgelesenen bewegten Bilds oder des Stehbilds zur Anzeige auf der Anzeigevorrichtung reproduziert.

10. Datenverarbeitungsvorrichtung nach Anspruch 1, bei der die Anordnungseinrichtung zumindest zwischen dem Linientyp, der Größe und dem Bereichsmustertyp, der zum Zeichnen der Farbe, der Form, der Kontur eines Symbols verwendet wird, für den ersten Typ von Einzeldaten gegenüber dem Symbol für den zweiten Typ von Einzeldaten unterscheidet.

11. Datenverarbeitungsvorrichtung nach Anspruch 1, bei der sowohl die Bildeinzeldaten vom ersten Typ als auch diejenigen vom zweiten Typ über Zusatzinformation verfügen;
- wobei die Anordnungseinrichtung zwischen den Anzeigeweisen eines entsprechenden Symbols für Einzeldaten mit der Zusatzinformation und anderen Einzeldaten unterscheidet.

12. Datenverarbeitungsvorrichtung nach Anspruch 11, bei der die Zusatzinformation aus Sprachinformation, Textdaten oder sowohl Sprachinformation als auch Textdaten besteht, die zu Einzeldaten hinzugefügt sind.

## Revendications

1. Dispositif de traitement de données d'images destiné à afficher un catalogue d'éléments de données d'images d'une pluralité de types incluant un élément de données d'images d'un premier type associé à un intervalle temporel sur un axe temporel et un élément de données d'images indépendant d'un second type associé à une valeur instantanée, dans lequel chacun des éléments de données d'images est également associé à des informations de classification destinées à classifier ledit élément de données d'images en une pluralité de catégories différentes desdits premier et second types d'éléments de données d'images, ledit dispositif de traitement de données comprenant :
un dispositif d'affichage (7), et
un moyen de disposition (1,6) destiné à extraire une pluralité d'éléments de données d'images d'un support d'enregistrement (9) afin de classifier ladite pluralité extraite d'éléments de données d'images pour chacune des catégories, et de générer un catalogue dans lequel une combinaison d'éléments de données d'images dudit premier type et d'éléments de données d'images dudit second type respectivement symbolisés sont disposés pour chacune des catégories dans lequel chacun des éléments de données d'images du premier type est symbolisé selon des modalités modifiées correspondant à une longueur dudit intervalle temporel sur son axe du temps, et chacun des éléments de données d'images du second type est symbolisé selon des modalités constantes prédéterminées, pour affichage sur ledit dispositif d'affichage (7).

2. Dispositif de traitement de données selon la revendication 1 comprenant en outre :
un dispositif de pointage destiné à permettre à l'utilisateur de définir un point arbitraire dudit affichage de catalogue sur ledit dispositif d'affichage,
un moyen de sélection réagissant à la spécification d'un point donné dudit affichage de catalogue au moyen dudit dispositif de pointage permettant la sélection d'un desdits éléments de données présentant une relation prédéterminée avec ledit point défini, et
un moyen de reproduction destiné à extraire et à reproduire ledit élément de données sélectionné.

3. Dispositif de traitement de données selon la revendication 1, dans lequel ladite pluralité de catégories inclut une année, un mois et un jour de génération dudit élément de données.

4. Dispositif de traitement de données selon la revendication 1, dans lequel ledit élément de données inclut des données d'images.

5. Dispositif de traitement de données selon la revendication 4, dans lequel ledit premier type d'élément de données est constitué de données de film.

6. Dispositif de traitement de données selon la revendication 5, dans lequel ledit second type d'élément de données est constitué de données d'images fixes.

7. Dispositif de traitement de données selon la revendication 4, comprenant en outre :
un dispositif de pointage permettant à un utilisateur de définir un point arbitraire dans ledit affichage de catalogue sur ledit dispositif d'affichage,
un moyen de sélection réagissant à la définition d'un point donné dudit affichage de catalogue par ledit dispositif de pointage destiné à sélectionner une desdites données d'images présentant une relation prédéterminée avec ledit point défini, et
un moyen de reproduction destiné à extraire lesdites données d'images sélectionnées et à reproduire ces données pour afficher sur ledit dispositif d'affichage.

8. Dispositif de traitement de données selon la revendication 7 comprenant en outre :
un moyen d'entrée destiné à entrer un film et une image fixe sous la forme de données d'images comportant une discrimination entre elles,
un moyen de stockage destiné à stocker lesdites données d'images.

9. Dispositif de traitement de données selon la revendication 7, dans lequel ledit moyen de reproduction reproduit une image réduite dudit film ou de ladite image fixe lus pour affichage sur ledit dispositif d'affichage.

10. Dispositif de traitement de données selon la revendication 1, dans lequel ledit moyen de disposition différencie au moins un type de ligne, de dimension et de motif localisé utilisés pour dessiner une couleur, une forme, un contour d'un symbole dudit premier type d'éléments de données et du symbole dudit second type d'éléments de données.

11. Dispositif de traitement de données selon la revendication 1, dans lequel l'un quelconque desdits éléments de données d'images du premier type et desdits éléments de données d'images du second type disposent d'informations supplémentaires,
dans lequel ledit moyen de disposition différencie une modalité d'affichage d'un symbole correspondant selon qu'il s'agit d'un élément de données muni desdites informations supplémentaires et d'autres éléments de données.

12. Dispositif de traitement de données selon la revendication 11, dans lequel lesdites informations supplémentaires sont des informations vocales, des données textuelles, ou à la fois des informations vocales et des données textuelles présentes dans un élément de données.
